(19) Europäisches Patentamt
European Patent Office
Office européen des brevets

(11) EP 2 733 870 B1

(12) EUROPEAN PATENT SPECIFICATION

(45) Date of publication and mention
of the grant of the patent:
06.04.2016 Bulletin 2016/14

(51) Int Cl.:
*H04B 17/318* (2015.01)   *H01Q 1/12* (2006.01)

(21) Application number: 12812811.3

(22) Date of filing: 12.10.2012

(86) International application number:
**PCT/CN2012/082831**

(87) International publication number:
**WO 2013/123776 (29.08.2013 Gazette 2013/35)**

(54) **METHOD AND SYSTEM FOR ANTENNA ALIGNMENT**

ANTENNENAUSRICHTUNGSVERFAHREN UND -SYSTEM

PROCÉDÉ ET SYSTÈME POUR L'ORIENTATION D'ANTENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 24.02.2012 CN 201210043566

(43) Date of publication of application:
**21.05.2014 Bulletin 2014/21**

(73) Proprietor: **Huawei Technologies Co., Ltd.
Longgang District
Shenzhen, Guangdong 518129 (CN)**

(72) Inventors:
• **YI, Xiongshu
Shenzhen
Guangdong 518129 (CN)**
• **ZHANG, Song
Shenzhen
Guangdong 518129 (CN)**

(74) Representative: **Pfenning, Meinig & Partner mbB
Patent- und Rechtsanwälte
Joachimsthaler Straße 12
10719 Berlin (DE)**

(56) References cited:
**CN-A- 101 478 336      CN-A- 102 571 242
CN-U- 202 043 116       US-A1- 2002 177 405
US-A1- 2003 039 319      US-A1- 2010 008 266**

Description

TECHNICAL FIELD

The present invention relates to the field of communications, and in particular, to a method and a system for antenna alignment in the field of communications.

BACKGROUND

In a communication system including a macro base station (Macro Base Station, "Macro BS" for short), a micro base station (Micro Base Station, "Micro BS" for short)/pico base station (Pico Base Station, "Pico BS" for short), and a user equipment (User Equipment, "UE" for short), the micro base station or the pico base station is a base station for the user equipment to access, and directly serves the user equipment such as a mobile phone, while the macro base station may be connected to a core network through, for example, a wired or microwave communication link. A problem existing in the communication system is how to transmit service data of a terminal user to the macro base station.

At present, the foregoing problem is usually solved by adopting the following two solutions. One solution is to adopt a wired connection, such as a cable or an optical fiber, but a wiring cost and a labor cost of the solution are both very high. The other solution is to adopt a wireless backhaul technology. The wireless backhaul technology may be a microwave wireless technology, and may also be a low carrier frequency wireless technology based on the wireless fidelity (Wireless Fidelity, "WIFI" for short), 802.16 protocol, or long term evolution (Long Term Evolution, "LTE" for short), and in order to reduce power and reduce network interference, a directional antenna is usually adopted in the wireless backhaul technology.

Because the directional antenna is adopted in the wireless backhaul technology, if a signal transmitting direction is not aligned with a destination antenna, namely, a transmitting antenna is not aligned with a fixed point having a maximum gain of the destination antenna, signal quality deteriorates or serious power waste is caused. Therefore, how to implement antenna alignment becomes an important problem to be faced in the wireless backhaul solution. US 2010/008266 A1 discusses a tool for antenna alignment comprising a display for received signal strength indication data. US 2002/0177405 A1 discusses an apparatus and method for aligning the antennas of two transceivers of a point-to-point wireless millimeter communications link.

At present, in consideration of safety and radiation, during alignment of an antenna, a power source of a backhaul access point (Backhaul Access Point, "BH AP" for short) is usually not turned on. However, if the power source of the device is not turned on, debugging cannot be performed, so that whether the antenna is aligned cannot be determined. Therefore, during alignment of an antenna, an engineering worker needs to first install the antenna at a high place (generally more than 5 meters high), then go down from the high place, turn on the power source of the device and detect the device on the ground, and reach the high place again to debug the antenna. Moreover, the engineering worker usually needs to go back and forth many times to align the antenna. Therefore, installation and debugging are difficult, alignment precision is low, and a cost is high.

SUMMARY

Embodiments of the present invention provide a method and a system for antenna alignment, which can improve precision in antenna alignment, and reduce difficulty and a cost in antenna alignment.

In one aspect, an embodiment of the present invention provides a method for antenna alignment, where the method includes: receiving, in a receiving direction of a first antenna, an electromagnetic wave signal transmitted by a second antenna; determining a strength value of the electromagnetic wave signal; converting the strength value into a display value within a predetermined range; and displaying the display value, so that a user determines, according to the display value, whether the first antenna is aligned with the second antenna, the method further comprises when determining that a first power supply module of a communication device instead of a second power supply module of the communication device supplies power to the communication device comprising the first antenna, wherein a power supply voltage of the first power supply module is lower than a power supply voltage of the second power supply module of the communication device, only enabling a receiving function of the communication device among the receiving function and a transmitting function of the communication device, and the receiving the electromagnetic wave signal transmitted by the second antenna comprises receiving, through the receiving function of the communication device, the electromagnetic wave signal transmitted by the second antenna.

In another aspect, an embodiment of the present invention provides a system for antenna alignment, where the system includes a displaying module and a communication device having a first antenna. The communication device further includes: a receiving unit, configured to receive, in a receiving direction of the first antenna, an electromagnetic wave signal transmitted by a second antenna; a first determining unit, configured to determine a strength value of the electromagnetic wave signal; and a converting unit, configured to convert the strength value into a display value within a predetermined range. The displaying module is configured to display the display value, so that a user determines, according to the display value, whether the first antenna is aligned with the second antenna. The system further comprises a first power supply module, configured to supply power to the communication device, wherein a power supply voltage of the first power supply module is lower than a power supply voltage of a second power supply module of the communication device. The communication device further comprises a second determining unit, configured to determine that the first power supply module supplies power to the communication device; and an enabling unit, configured to only enable a receiving function among the receiving function and a transmitting function of the communication device, and the receiving unit is further configured to receive, through the receiving function of the communication device, the electromagnetic wave signal transmitted by the second antenna.

Based on the foregoing technical solutions, in the method and the system for antenna alignment in the embodiments of the present invention, a strength value of an electromagnetic wave signal is determined in a receiving direction of an antenna to be aligned, and is displayed, so that a user performs an antenna alignment operation according to a display value, thereby improving precision in antenna alignment, and reducing difficulty and a cost in antenna alignment.

## BRIEF DESCRIPTION OF DRAWINGS

To illustrate the technical solutions in the embodiments of the present invention more clearly, the following briefly introduces accompanying drawings required for describing the embodiments of the present invention. Apparently, the accompanying drawings in the following description are merely some embodiments of the present invention, and a person of ordinary skill in the art may further obtain other drawings according to the accompanying drawings without creative efforts.

FIG. 1 is a schematic flow chart of a method for antenna alignment according to an embodiment of the present invention;

FIG. 2 is another schematic flow chart of a method for antenna alignment according to an embodiment of the present invention;

FIG. 3 is a schematic block diagram of a system for antenna alignment according to an embodiment of the present invention;

FIG. 4 is another schematic block diagram of a system for antenna alignment according to an embodiment of the present invention;

FIG. 5A and FIG. 5B are still another schematic block diagrams of a system for antenna alignment according to an embodiment of the present invention;

FIG. 6A and FIG. 6B are still another schematic block diagrams of a system for antenna alignment according to an embodiment of the present invention; and

FIG. 7 is still another schematic block diagram of a system for antenna alignment according to an embodiment of the present invention.

## DESCRIPTION OF EMBODIMENTS

The following clearly describes the technical solutions in the embodiments of the present invention with reference to the accompanying drawings in the embodiments of the present invention. Apparently, the embodiments to be described are merely part rather than all of the embodiments of the present invention. All other embodiments obtained by a person of ordinary skill in the art based on the embodiments of the present invention without creative efforts shall fall within the protection scope of the present invention.

It should be understood that, the technical solutions in the embodiments of the present invention may be applied in various communication systems, for example, a global system for mobile communications (Global System for Mobile communications, "GSM" for short) system, a code division multiple access (Code Division Multiple Access, "CDMA" for short) system, a wideband code division multiple access (Wideband Code Division Multiple Access, "WCDMA" for short) system, a general packet radio service (General Packet Radio Service, "GPRS" for short) system, a long term evolution (Long Term Evolution, "LTE" for short) system, an LTE frequency division duplex (Frequency Division Duplex, "FDD" for short) system, an LTE time division duplex (Time Division Duplex, "TDD" for short) system, a universal mobile telecommunication system (Universal Mobile Telecommunication System, "UMTS" for short), a worldwide interoperability for microwave access (Worldwide Interoperability for Microwave Access, "WiMAX" for short) communication system, and a microwave communication system.

In the embodiments of the present invention, a base station may be a base station (Base Transceiver Station, "BTS" for short) in the GSM or CDMA, may also be a base station (NodeB, "NB" for short) in the WCDMA, and may further be an evolutional base station (Evolutional Node B, "ENB or e-NodeB" for short) in the LTE, which is not limited in the present invention.

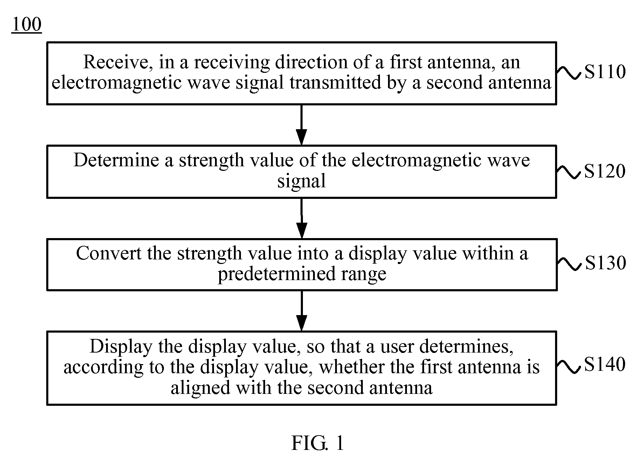

FIG. 1 is a schematic flow chart of a method for antenna alignment 100 according to an embodiment of the present invention. As shown in FIG. 1, the method 100 includes:

S110: Receive, in a receiving direction of a first antenna, an electromagnetic wave signal transmitted by a second antenna.

S120: Determine a strength value of the electromagnetic wave signal.

S130: Convert the strength value into a display value within a predetermined range.

S140: Display the display value, so that a user determines, according to the display value, whether the first antenna is aligned with the second antenna.

In order to perform antenna alignment conveniently, improve precision in antenna alignment, and reduce difficulty and a cost in antenna alignment, a system for antenna alignment may first receive, in a receiving direction of a first antenna to be aligned, an electromagnetic wave signal transmitted by a second antenna, then determine a strength value of the electromagnetic wave signal according to the received electromagnetic wave signal, and convert the determined strength value into a display value within a predetermined range to conform to a use habit of a user, so that the system may display the display value, and the user determines, according to the display value, whether the first antenna is aligned with the second antenna.

Therefore, in the method for antenna alignment in the embodiment of the present invention, a strength value of an electromagnetic wave signal is determined in a receiving direction of an antenna to be aligned, and is displayed, so that a user performs an antenna alignment operation according to a display value, thereby improving precision in antenna alignment, and reducing difficulty and a cost in antenna alignment.

In another aspect, in the method in the embodiment of the present invention, a strength value of a received electromagnetic wave signal is converted into a display value within a predetermined range, so that an ordinary engineering worker can conduct the antenna alignment operation merely according to the display value, and the engineering worker does not need to thoroughly understand physical meaning of strength of an electromagnetic wave signal to determine, according to the strength value of the signal, whether the antenna is aligned, thereby lowering a technical requirement on the engineering worker, and further simplifying the antenna alignment operation and reducing a labor cost in antenna alignment.

In the embodiment of the present invention, the system for antenna alignment that executes the method 100 may be independent of a communication device including a first antenna and have an electromagnetic wave signal receiving function, so that a power source device which has a high power supply voltage and is of the communication device does not need to be turned on when antenna alignment is performed according to the method in the embodiment of the present invention, thereby avoiding exposure of the engineering worker to huge electromagnetic radiation generated by the communication device and a potential electric shock hazard, and improving personal safety of the engineering worker when the antenna alignment operation is implemented.

In another aspect, in the embodiment of the present invention, the system for antenna alignment may receive, by means of an electromagnetic wave signal receiving function of the communication device including the first antenna, an electromagnetic wave signal transmitted by the second antenna and determine signal strength. In this case, to avoid electromagnetic radiation, only a power supply module which has a low power supply voltage and is of the communication device may be enabled in the antenna alignment, and a power supply module which has a high power supply voltage and is of the communication device is enabled after the antenna alignment, so as to receive and transmit a signal.

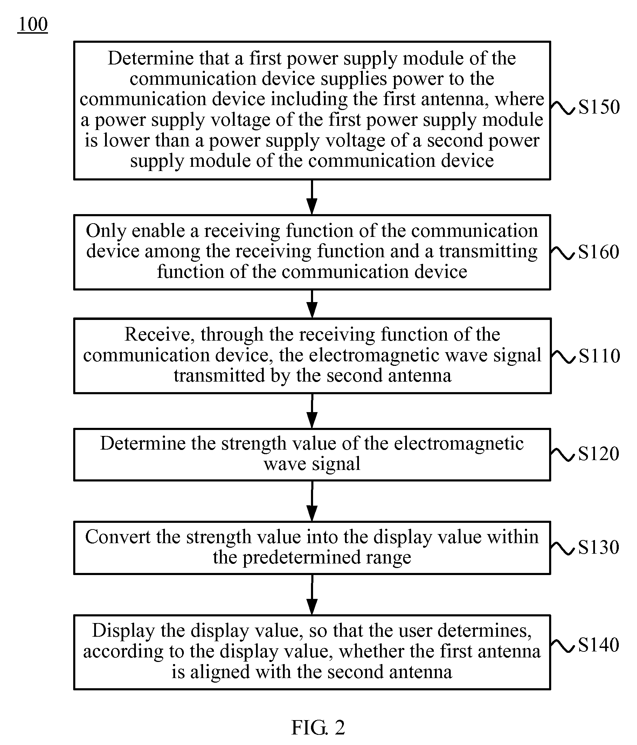

Therefore, as shown in FIG. 2, the method 100 according to the embodiment of the present invention further includes:

S150: Determine that a first power supply module of the communication device supplies power to the communication device including the first antenna, where a power supply voltage of the first power supply module is lower than a power supply voltage of a second power supply module of the communication device.

S160: Only enable a receiving function of the communication device among the receiving function and a transmitting function of the communication device.

The receiving the electromagnetic wave signal transmitted by the second antenna includes: receiving, through the receiving function of the communication device, the electromagnetic wave signal transmitted by the second antenna.

In S150, the system for antenna alignment determines that the first power supply module with the low power supply voltage supplies power to the communication device. The system may determine a power supply status of the communication device in a variety of manners. For example, the system may indicate the power supply status of the communication device through a high level signal and a low level signal. Specifically, for example, the high level signal may be used to indicate that the first power supply module with the low power supply voltage supplies power to the communication device, and the low level signal may be used to indicate that the second power supply module with the high power supply voltage supplies power to the communication device.

Not part of the embodiment of the present invention, but presented as example, optionally, the first power supply module includes various light or portable power sources temporarily supplying power to the communication device, for example, various power sources such as a mobile battery, an external battery, and a backup battery; and the second power supply module of the communication device includes various domestic power sources or industrial power sources continuously supplying power to the communication device, for example, a domestic power source of 220V or an industrial power source of 380V, which are merely taken as an example for description in the embodiment of the present invention, and to which the embodiment of the present invention is not limited. Compared with the domestic power sources or industrial power sources, the light or portable power sources have a much lower power supply voltage (for example, 3.7V or 5V), which can avoid exposure of the engineering worker to huge electromagnetic radiation generated by the communication device and a potential electric shock hazard, thereby improving personal safety of the engineering worker when the antenna alignment operation is implemented.

It should be understood that, for conciseness and ease of understanding, the first antenna included in the communication device in the embodiment of the present invention is described by using a directional antenna as an example, and the communication device is described by using a backhaul access point BH AP as an example, to which the embodiment of the present invention is not limited. The first antenna may also be an omnidirectional antenna, and the communication device may also be a macro base station, a micro base station, a pico base station, a backhaul base station (Backhaul Base Station, "BH BS" for short), a backhaul access point BH AP, or various microwave devices.

In S160, the system for antenna alignment only enables the receiving function of the communication device and does not enable the transmitting function of the communication device among the receiving function and the transmitting function of the communication device, thereby further reducing the electromagnetic radiation generated by the communication device, and improving the safety in antenna aligmnent.

In S110, the system for antenna alignment receives, through the receiving function of the communication device, the electromagnetic wave signal transmitted by the second antenna. For example, when the system for antenna alignment determines, according to the high level signal, that a battery supplies power to the communication device BH AP, the system for antenna alignment only enables cell signal strength measurement and does not enable the transmitting function of the BH AP, and controls that the first antenna receives the electromagnetic wave signal transmitted by the second antenna.

In S120, the system for antenna alignment determines the strength value of the electromagnetic wave signal.

In the embodiment of the present invention, the system may determine the strength value of the received electromagnetic wave signal in a variety of manners. For example, the system may obtain a power value of the received electromagnetic wave signal by collecting statistics about time domain signals; the system may also complete an access procedure based on an existing protocol procedure, such as the LTE, WIFI, and worldwide interoperability for microwave access (Worldwide Interoperability for Microwave Access, "WiMAX" for short), perform reference signal receiving power (Reference Signal Receiving Power, "RSRP" for short) or received signal strength indication (Received Signal Strength Indication, "RSSI" for short) measurement, and determine the strength value of the received electromagnetic wave signal.

It should be understood that, performing RSRP or RSSI measurement in an LTE system is merely taken as an example for description in the embodiment of the present invention, and the strength value of the electromagnetic wave signal may be determined according to other existing protocols in other communication systems.

In the embodiment of the present invention, optionally, the system for antenna alignment determines, according to the following equations (1) to (4), the strength value $P_{dBm}$ which is expressed in dBm and is of the electromagnetic wave signal:

$$P(j) = \frac{1}{M} \sum_{i=0}^{M-1} \|r(i)\|_F^2 \tag{1}$$

$$\widetilde{P}(0) = P(0) \tag{2}$$

$$\widetilde{P}(j) = \alpha \cdot P(j) + (1-\alpha) \cdot \widetilde{P}(j-1) \tag{3}$$

EP 2 733 870 B1

$$P_{dBm}(j) = 10 \cdot \lg\left(\tilde{P}(j)\right) + A \qquad (4)$$

where $P(j)$ is an instantaneous power value in a $j$ th measurement; $j$ is a non-negative integer; $M$ is the number of time domain sampling points in a window length in a single measurement; r($i$) is the received electromagnetic wave signal; $\tilde{P}(j)$ is a power value which has undergone filter processing and is in the $j$ th measurement; $\alpha$ is a filter processing coefficient; and $A$ is a constant.

In equations (2) and (3), to reduce an effect caused by signal fluctuation, filter processing may be performed on the instantaneous power value $P(j)$ in the $j$ th measurement by using an alpha filter, to obtain the power value $\tilde{P}(j)$ which has undergone filter processing and is in the $j$ th measurement. In the equation (4), $10 \cdot \lg(\tilde{P}(j))$ is a digital domain strength value expressed in dBm, and the digital domain strength value needs to correspond to analog power at an input port of an antenna. Therefore, an analog strength value in the $j$ th measurement is obtained after $\tilde{P}(j)$ has undergone the processing in equation (4), where the constant $A$ is related to radio-frequency and intermediate-frequency digital processing.

It should be understood that, in the embodiment of the present invention, the effect of signal fluctuation may be reduced through other filter processing, to which the embodiment of the present invention is not limited.

In S130, the system for antenna alignment converts the strength value into the display value within the predetermined range.

In the embodiment of the present invention, optionally, the system converts the strength value into the display value $E$ determined according to the following equation (5):

$$E = \left[ \left(P_{dBm} + B\right) \cdot \frac{10^n - 1}{Y - X} \right] \qquad (5)$$

where $B$ is a constant; $n$ is the number of digits of the display value; $X$ is a minimum strength value which is expressed in dBm and is of the electromagnetic wave signal; $Y$ is a maximum strength value which is expressed in dBm and is of the electromagnetic wave signal; and [] is an operation symbol for rounding.

For example, assuming that a range of the strength value which is expressed in dBm and is of the electromagnetic wave signal is $(X, Y)$, and the number of digits of the display value finally presented to the user is $n = 2$, namely, the strength value is converted to a predetermined range from 0 to 99, the display value $E$ may be determined according to the following equation (6):

$$E = \left[ \left(P_{dBm} + B\right) \cdot \frac{99}{Y - X} \right] \qquad (6)$$

where $B$ is a constant, for example, $B = |X|$, so as to convert the strength value $P_{dBm}$ that is determined through the foregoing equations (1) to (4) and is usually negative into a positive value, and in order to conform to a use habit of the user, the strength value of the electromagnetic wave signal is converted into a display value only indicating the signal strength, thereby lowering the technical requirement on the engineering worker, and further simplifying the antenna alignment operation and reducing the labor cost in antenna alignment.

It should be understood that, in the embodiment of the present invention, the strength value of the signal may also be converted through other processing; the operation symbol [] for rounding includes a round up operation and also includes a round down operation; and the number of digits $n$ of the display value may also be other natural numbers such as 1, 2, and 3, to which the embodiment of the present invention is not limited.

In S140, the system for antenna alignment displays the display value, so that the user determines, according to the display value, whether the first antenna is aligned with the second antenna. For example, the user may find, according to the display value, a location where the received signal is strongest, and fixedly install the first antenna, thereby implementing alignment of the first antenna with the second antenna.

It should be understood that, in the embodiments of the present invention, the serial numbers of the foregoing steps do not imply an execution sequence, and the execution sequence of the steps should be determined according to functions and internal logic, so the serial numbers are not intended to limit the implementation process of the embodiments of the present invention.

In addition, the term "and/or" in this document is only an association relationship for describing associated objects, and indicates that three relationships may exist, for example, A and/or B may indicate the following three cases: A exists separately, both A and B exist, and B exists separately. In addition, the character "/" in this document usually indicates that the former and later associated objects are in a "or" relationship.

Therefore, in the method for antenna alignment in the embodiment of the present invention, a strength value of an electromagnetic wave signal is determined in a receiving direction of an antenna to be aligned, and is displayed, so that a user performs an antenna alignment operation according to a display value, thereby improving precision in antenna alignment, and reducing difficulty and a cost in antenna alignment.

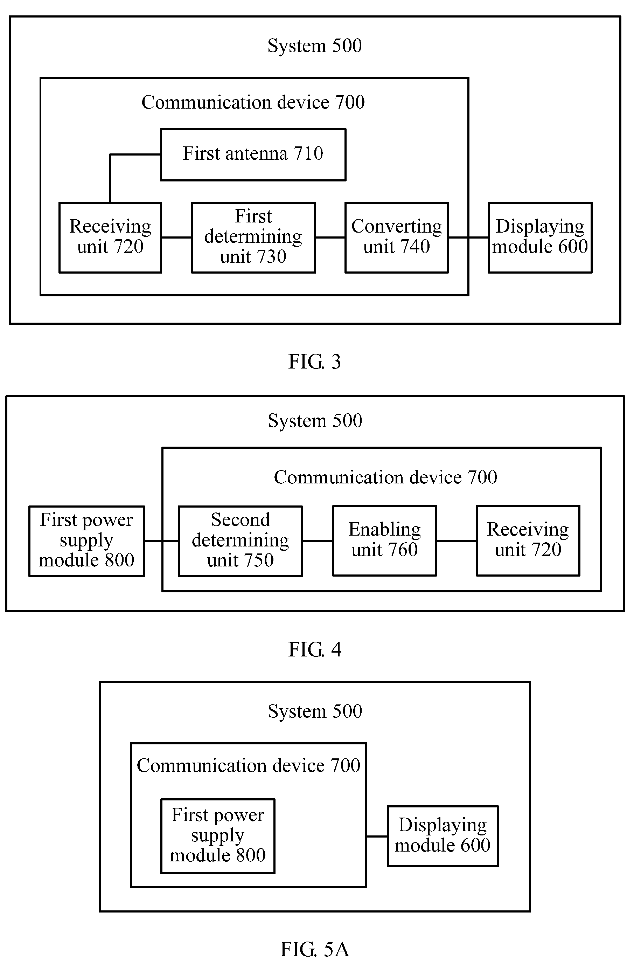

The method for antenna alignment according to the embodiment of the present invention is described in detail in the foregoing with reference to FIG. 1 and FIG. 2, and a system for antenna alignment according to an embodiment of the present invention is described in detail in the following with reference to FIG. 3 to FIG. 7.

FIG. 3 is a schematic block diagram of a system for antenna alignment 500 according to an embodiment of the present invention. As shown in FIG. 3, the system 500 includes a displaying module 600 and a communication device 700 having a first antenna 710. The communication device 700 further includes:

a receiving unit 720, configured to receive, in a receiving direction of the first antenna 710, an electromagnetic wave signal transmitted by a second antenna;
a first determining unit 730, configured to determine a strength value of the electromagnetic wave signal; and
a converting unit 740, configured to convert the strength value into a display value within a predetermined range;

The displaying module 600 is configured to display the display value, so that a user determines, according to the display value, whether the first antenna is aligned with the second antenna.

Therefore, in the system for antenna alignment in the embodiment of the present invention, a strength value of an electromagnetic wave signal is determined in a receiving direction of an antenna to be aligned, and is displayed, so that a user performs an antenna alignment operation according to a display value, thereby improving precision in antenna alignment, and reducing difficulty and a cost in antenna alignment.

In the embodiment of the present invention, optionally, as shown in FIG. 4, the system 500 further includes:

a first power supply module 800, configured to supply power to the communication device 700, where a power supply voltage of the first power supply module 800 is lower than a power supply voltage of a second power supply module of the communication device 700.

The communication device 700 further includes:

a second determining unit 750, configured to determine that the first power supply module 800 supplies power to the communication device 700; and

an enabling unit 760, configured to only enable a receiving function among the receiving function and a transmitting function of the communication device 700.

The receiving unit 720 is further configured to receive, through the receiving function of the communication device 700, the electromagnetic wave signal transmitted by the second antenna.

Not part of the embodiment of the present invention, but presented as example, the first power supply module includes various low voltage power sources temporarily supplying power to the communication device; and the second power supply module includes various power sources continuously supplying power to the communication device. Optionally, the first power supply module includes various light or portable power sources, for example, various power sources such as a mobile battery, an external battery, and a backup battery. Optionally, the second power supply module includes various domestic power sources or industrial power sources, for example, a domestic power source of 220V or an industrial power source of 380V.

In the embodiment of the present invention, optionally, the first determining unit 730 is further configured to determine, according to the following equations, the strength value $P_{dBm}$ which is expressed in dBm and is of the electromagnetic wave signal:

$$P(j) = \frac{1}{M} \sum_{i=0}^{M-1} \|r(i)\|_F^2$$

$$\widetilde{P}(0) = P(0);$$

$$\widetilde{P}(j) = \alpha \cdot P(j) + (1-\alpha) \cdot \widetilde{P}(j-1);$$

$$P_{dBm}(j) = 10 \cdot \lg(\widetilde{P}(j)) + A;$$

where $P(j)$ is an instantaneous power value in a $j$ th measurement; $j$ is a non-negative integer; $M$ is the number of time domain sampling points in a window length in a single measurement; $\mathbf{r}(i)$ is the received electromagnetic wave signal; $\widetilde{P}(j)$ is a power value which has undergone filter processing and is in the $j$ th measurement; $\alpha$ is a filter processing coefficient; and $A$ is a constant.

In the embodiment of the present invention, optionally, the converting unit 740 is further configured to convert the strength value into the display value $E$ determined according to the following equation:

$$E = \left[ (P_{dBm} + B) \cdot \frac{10^n - 1}{Y - X} \right];$$

where $B$ is a constant; $n$ is the number of digits of the display value; $X$ is a minimum strength value which is expressed in dBm and is of the electromagnetic wave signal; $Y$ is a maximum strength value which is expressed in dBm and is of the electromagnetic wave signal; and [] is an operation symbol for rounding. For example, $B = |X|$.

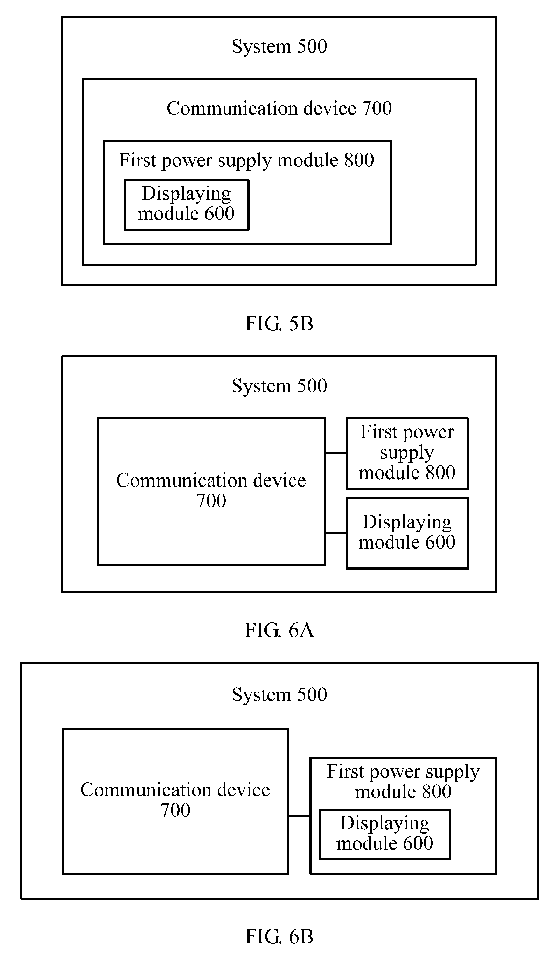

In the embodiment of the present invention, as shown in FIG. 5A or FIG. 5B, optionally, the first power supply module 800 is integrated in the communication device 700. For example, two power supply modules are disposed inside the communication device 700, one power supply module is a working power source for the communication device to receive and/or transmit a signal, and the other power supply module is a power source with a low power supply voltage for antenna alignment, for example, a battery. It should be understood that, when the first power supply module is a battery, a battery insertion opening included in the communication device should be easy to be opened and closed for battery insertion.

In the embodiment of the present invention, as shown in FIG. 6A or FIG. 6B, optionally, the first power supply module 800 is disposed separately, and supplies power to the communication device 700 through a power source interface on the communication device 700. That is, the first power supply module is disposed separately from the communication device, and may supply power to the communication device 700 through a power source interface, such as a universal serial bus (Universal Serial BUS, "USB" for short) and a power over Ethernet (Power Over Ethernet, "POE" for short).

In the embodiment of the present invention, as shown in FIG. 5A or FIG. 6A, optionally, the displaying module 600 is disposed on an external surface of the communication device 700. For example, the displaying module 600 is disposed on an external board of the communication device BH AP.

In the embodiment of the present invention, as shown in FIG. 5B or FIG. 6B, optionally, the displaying module 600 is disposed inside a casing of the first power supply module 800, so as to present the displaying module when the casing is opened. In this way, the structure is simple and compact, and easy to be used.

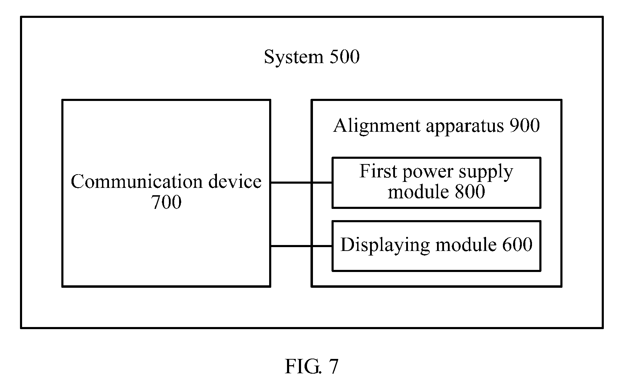

In the embodiment of the present invention, as shown in FIG. 7, optionally, the first power supply module 800 and the displaying module 600 form an alignment apparatus 900 independent of the communication device 700, the first power supply module 800 supplies power to the communication device 700 through a universal serial bus USB interface on the communication device 700, and the displaying module 600 obtains, through the USB interface, the display value transmitted by the communication device 700, and displays the display value.

It should be understood that, the first power supply module may also supply power to the communication device through other interfaces, and the displaying module may also obtain, through other interfaces, the display value transmitted by the communication device, and display the display value, to which the embodiment of the present invention is not limited.

In the embodiment of the present invention, optionally, the alignment apparatus 900 is made of a magnetic material; or the alignment apparatus 900 further includes an adsorption structure, so as to be adsorbed on the external surface of the communication device 700. For example, the alignment apparatus is made of a magnetic material, and may be adsorbed on a metal casing of the communication device BH AP, so that the alignment apparatus can be easily fixed in the antenna alignment, thereby facilitating the antenna alignment operation. For another example, the alignment apparatus may include an apparatus or a structure such as a magnet apparatus and a sucker, so as to be adsorbed on the external surface of the communication device, thereby fixing the alignment apparatus, and facilitating the antenna alignment operation.

It should be understood that, the system for antenna alignment 500 according to the embodiment of the present invention may correspond to an execution subject of the method for antenna alignment according to the embodiment of the present invention, and the foregoing and other operations and/or functions of the modules of the system 500 are for implementing the corresponding procedures of the methods in FIG. 1 and FIG. 2, and for conciseness, details are not repeatedly described here.

Therefore, in the system for antenna alignment in the embodiment of the present invention, a strength value of an electromagnetic wave signal is determined in a receiving direction of an antenna to be aligned, and is displayed, so that a user performs an antenna alignment operation according to a display value, thereby improving precision in antenna alignment, and reducing difficulty and a cost in antenna alignment.

A person of ordinary skill in the art may appreciate that, units and algorithm steps of examples described in combination with the embodiments disclosed in this specification may be implemented by electronic hardware, computer software, or a combination of the two. In order to clearly describe interchangeability between the hardware and the software, compositions and steps of the examples are generally described according to functions in the foregoing description. Whether the functions are executed by hardware or software depends on particular applications and design constraint conditions of the technical solutions. A person skilled in the art may use different methods to implement the described functions for each particular application, but it should not be considered that the implementation goes beyond the scope of the present invention.

It can be clearly understood by a person skilled in the art that, for the purpose of convenient and brief description, for a detailed working process of the foregoing system, apparatus and unit, reference may be made to the corresponding process in the method embodiments, and details are not repeatedly described here.

In the several embodiments provided in the present application, it should be understood that the disclosed system, apparatus, and method may be implemented in other manners. For example, the described apparatus embodiment is merely exemplary. For example, the dividing of the units is merely a kind of logical function dividing, and there may be other dividing manners in actual implementation. For example, multiple units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be electronic, mechanical, or in other forms.

The units described as separate parts may or may not be physically separate, and parts shown as units may or may not be physical units, may be located in one position, or may be distributed on multiple network units. Part or all of the units here may be selected according to actual needs to achieve the objectives of the solutions of the embodiments of the present invention.

In addition, functional units in the embodiments of the present invention may be integrated into a processing unit, and each of the units may also exist alone physically, and two or more than two units may also be integrated into one unit. The integrated unit may be implemented in a form of hardware, and may also be implemented in a form of a software functional unit.

When the integrated unit is implemented in the form of a software functional unit and sold or used as an independent product, the integrated unit may be stored in a computer readable storage medium. Based on such understanding, the technical solutions of the present invention essentially, or the part contributing to the prior art, or all or part of the technical solutions may be implemented in the form of a software product. The computer software product is stored in a storage medium and includes several instructions for instructing a computer device (which may be a personal computer, a server, a network device, and the like) to execute all or part of steps of the method described in the embodiments of the present invention. The storage medium includes: any medium that is capable of storing program codes, such as a U disk, a removable hard disk, a read-only memory (ROM, Read-Only Memory), a random access memory (RAM, Random Access Memory), a magnetic disk, or an optical disk.

The foregoing description is merely specific embodiments of the present invention, but is not intended to limit the protection scope of the present invention. A person skilled in the art may easily derive various equivalent modifications or replacements within the technical scope disclosed in the present invention, and these modifications or replacements shall fall within the protection scope of the present invention. Therefore, the protection scope of the present invention shall be subject to the protection scope of the appended claims.

**Claims**

1. A method (100) for antenna alignment, comprising:

   Receiving (S110), in a receiving direction of a first antenna, an electromagnetic wave signal transmitted by a second antenna;
   determining (S120) a strength value of the electromagnetic wave signal;
   converting (S130) the strength value into a display value within a predetermined range; and
   displaying (S140) the display value, so that a user determines, according to the display value, whether the first antenna is aligned with the second antenna
   **characterized in that**
   the method further comprises:

   when determining (S150) that a first power supply module of a communication device instead of a second power supply module of the communication device supplies power to the communication device comprising the first antenna, wherein a power supply voltage of the first power supply module is lower than a power supply voltage of the second power supply module of the communication device,
   only enabling (S160) a receiving function of the communication device among the receiving function and a transmitting function of the communication device, and
   the receiving (S110) the electromagnetic wave signal transmitted by the second antenna comprises:

   receiving, through the receiving function of the communication device, the electromagnetic wave signal transmitted by the second antenna.

2. The method according to claim 1, wherein the determining (S120) the strength value of the electromagnetic wave signal comprises:

   determining, according to the following equations, a strength value $P_{dBm}$ which is expressed in dBm and is of the electromagnetic wave signal:

   $$P(j) = \frac{1}{M} \sum_{i=0}^{M-1} \|r(i)\|_F^2 \; ;$$

   $$\widetilde{P}(0) = P(0) \, ;$$

   $$\widetilde{P}(j) = \alpha \cdot P(j) + (1-\alpha) \cdot \widetilde{P}(j-1) \, ;$$

   $$P_{dBm}(j) = 10 \cdot \lg\left(\widetilde{P}(j)\right) + A \, ;$$

   wherein $P(j)$ is an instantaneous power value in a $j^{th}$ measurement; $j$ is a non-negative integer; $M$ is the number of time domain sampling points in a window length in a single measurement; $r(i)$ is the received electromagnetic wave signal; $\bar{P}(j)$ is a power value which has undergone filter processing and is in the $j^{th}$ measurement; $\alpha$ is a filter processing coefficient; and $A$ is a constant.

3. The method (100) according to claim2, wherein the converting (S130) the strength value into the display value within the predetermined range comprises:

   converting the strength value into the display value $E$ determined according to the following equation:

$$E = \left[ \left( P_{dBm} + B \right) \cdot \frac{10^n - 1}{Y - X} \right];$$

wherein $B$ is a constant; $n$ is the number of digits of the display value; $X$ is a minimum strength value which is expressed in dBm and is of the electromagnetic wave signal; $Y$ is a maximum strength value which is expressed in dBm and is of the electromagnetic wave signal; and [] is an operation symbol for rounding.

4. A system (500) for antenna alignment, comprising a displaying module (600) and a communication device (700) having a first antenna (710), wherein the communication device (700) further comprises:

a receiving unit (720), configured to receive, in a receiving direction of the first antenna (710), an electromagnetic wave signal transmitted by a second antenna;
a first determining unit (730), configured to determine a strength value of the electromagnetic wave signal; and
a converting unit (740), configured to convert the strength value into a display value within a predetermined range, and wherein
the displaying module (600) is configured to display the display value, so that a user determines, according to the display value, whether the first antenna (710) is aligned with the second antenna
**characterized in that**
the system further comprises:

a first power supply module (800), configured to supply power to the communication device (700), wherein a power supply voltage of the first power supply module is lower than a power supply voltage of a second power supply module of the communication device (700),
the communication device (700) further comprises:

a second determining unit (750), configured to determine that the first power supply module (800) supplies power to the communication device (700); and
an enabling unit (760), configured to only enable a receiving function among the receiving function and a transmitting function of the communication device (700), and
the receiving unit (720) is further configured to receive, through the receiving function of the communication device (700), the electromagnetic wave signal transmitted by the second antenna.

5. The system (500) according to claim 4, wherein the first determining unit (730) is further configured to:

determine, according to the following equations, a strength value $P_{dBm}$ which is expressed in dBm and is of the electromagnetic wave signal:

$$P(j) = \frac{1}{M} \sum_{i=0}^{M-1} \left\| r(i) \right\|_F^2;$$

$$\widetilde{P}(0) = P(0);$$

$$\widetilde{P}(j) = \alpha \cdot P(j) + (1 - \alpha) \cdot \widetilde{P}(j - 1);$$

$$P_{dBm}(j) = 10 \cdot \lg\left(\widetilde{P}(j)\right) + A;$$

wherein $P(j)$ is an instantaneous power value in a $j$ th measurement; $j$ is a non-negative integer; $M$ is the number of time domain sampling points in a window length in a single measurement; $r(i)$ is the received electromagnetic wave signal; $\widetilde{P}(j)$ is a power value which has undergone filter processing and is in the $j$ th measurement; $\alpha$ is a

filter processing coefficient; and *A* is a constant.

6. The system (500) according to claim 5, wherein the converting unit (740) is further configured to convert the strength value into the display value *E* determined according to the following equation:

$$E = \left[ \left( P_{dBm} + B \right) \cdot \frac{10^n - 1}{Y - X} \right];$$

wherein *B* is a constant; *n* is the number of digits of the display value; *X* is a minimum strength value which is expressed in dBm and is of the electromagnetic wave signal; *Y* is a maximum strength value which is expressed in dBm and is of the electromagnetic wave signal; and [] is an operation symbol for rounding.

7. The system (500) according to any one of claims 4 to 6, wherein
the first power supply module (800) is integrated in the communication device (700); or
the first power supply module (800) is disposed separately, and supplies power to the communication device (700) through a power source interface on the communication device (700).

8. The system (500) according to claim 7, wherein
the displaying module (600) is disposed on an external surface of the communication device (700); or
the displaying module (600) is disposed inside a casing of the first power supply module (800), so as to present the displaying module (600) when the casing is opened.

9. The system (500) according to any one of claims 4 to 6, wherein the first power supply module (800) and the displaying module (600) form an alignment apparatus independent of the communication device (700), the first power supply module (800) supplies power to the communication device (700) through a universal serial bus USB interface on the communication device (700), and the displaying module (600) obtains, through the USB interface, the display value transmitted by the communication device (700), and displays the display value.

10. The system (500) according to claim 9, wherein the alignment apparatus is made of a magnetic material; or the alignment apparatus further comprises an adsorption structure, so as to be adsorbed on the external surface of the communication device (700).

**Patentansprüche**

1. Verfahren (100) zur Antennenausrichtung, das Folgendes umfasst:

Empfangen (S110) in einer Empfangsrichtung einer ersten Antenne eines elektromagnetischen Wellensignals, das durch eine zweite Antenne gesendet wird;
Bestimmen (S120) eines Stärkewerts des elektromagnetischen Wellensignals;
Umsetzen (S130) des Stärkewerts in einen Anzeigewert innerhalb eines vorbestimmten Bereichs; und
Anzeigen (S140) des Anzeigewerts, so dass ein Anwender gemäß dem Anzeigewert bestimmt, ob die erste Antenne an der zweiten Antenne ausgerichtet ist,
**dadurch gekennzeichnet, dass**
das Verfahren ferner Folgendes umfasst:

wenn bestimmt wird (S150), dass ein erstes Stromversorgungsmodul einer Kommunikationsvorrichtung anstelle eines zweiten Stromversorgungsmoduls der Kommunikationsvorrichtung die Kommunikationsvorrichtung, die die erste Antenne umfasst, mit Strom versorgt, wobei eine Versorgungsspannung des ersten Stromversorgungsmoduls niedriger ist als eine Versorgungsspannung des zweiten Stromversorgungsmoduls der Kommunikationsvorrichtung,
nur Aktivieren (S160) einer Empfangsfunktion der Kommunikationsvorrichtung aus der Empfangsfunktion und einer Sendefunktion der Kommunikationsvorrichtung, und
das Empfangen (S110) des elektromagnetischen Wellensignals, das durch die zweite Antenne gesendet wird, Folgendes umfasst:

Empfangen durch die Empfangsfunktion der Kommunikationsvorrichtung des elektromagnetischen Wellensignals, das durch die zweite Antenne gesendet wird.

**2.** Verfahren nach Anspruch 1, wobei das Bestimmen (S120) des Stärkewerts des elektromagnetischen Wellensignals Folgendes umfasst:

Bestimmen gemäß den folgenden Gleichungen eines Stärkewerts $P_{dBm}$, der in dBm ausgedrückt ist und zu dem elektromagnetischen Wellensignal gehört:

$$P(j) = \frac{1}{M} \sum_{i=0}^{M-1} \|r(i)\|_F^2 ;$$

$$\widetilde{P}(0) = P(0);$$

$$\widetilde{P}(j) = \alpha \cdot P(j) + (1 - \alpha) \cdot \widetilde{P}(j-1);$$

$$P_{dBm}(j) = 10 \cdot \lg\left(\widetilde{P}(j)\right) + A;$$

wobei $P(j)$ ein augenblicklicher Leistungswert in einer *j-ten* Messung ist; *j* eine nicht negative Ganzzahl ist; *M* die Anzahl von Zeitbereichsabtastpunkten in einer Fensterlänge in einer einzelnen Messung ist; *r(i)* das empfangene elektromagnetische Wellensignal ist; *P(j)* ein Leistungswert ist, der Filterverarbeitung durchlaufen hat und in der *j-ten* Messung ist; $\alpha$ ein Filterverarbeitungskoeffizient ist; und A eine Konstante ist.

**3.** Verfahren (100) nach Anspruch 2, wobei das Umsetzen (S130) des Stärkewerts in den Anzeigewert innerhalb des vorbestimmten Bereichs Folgendes umfasst:

Umsetzen des Stärkewerts in den Anzeigewert E, der durch die folgende Gleichung bestimmt ist:

$$E = \left[ (P_{dBm} + B) \cdot \frac{10^n - 1}{Y - X} \right];$$

wobei *B* eine Konstante ist; *n* die Anzahl der Ziffern des Anzeigewerts ist; *X* ein kleinster Stärkewert ist, der in dBm ausgedrückt ist und zu dem elektromagnetischen Wellensignal gehört; *Y* ein größter Stärkewert ist, der in dBm ausgedrückt ist und zu dem elektromagnetischen Wellensignal gehört; und [] ein Operationssymbol für Rundung ist.

**4.** System (500) zur Antennenausrichtung, das ein Anzeigemodul (600) und eine Kommunikationsvorrichtung (700) umfasst, die eine erste Antenne (710) aufweist, wobei die Kommunikationsvorrichtung (700) ferner Folgendes umfasst:

eine Empfangseinheit (720), die konfiguriert ist, in einer Empfangsrichtung der ersten Antenne (710) ein elektromagnetisches Wellensignal, das durch eine zweite Antenne gesendet wird, zu empfangen;
eine erste Bestimmungseinheit (730), die konfiguriert ist, einen Stärkewert des elektromagnetischen Wellensignals zu bestimmen; und
eine Umsetzungseinheit (740), die konfiguriert ist, den Stärkewert in einen Anzeigewert innerhalb eines vorbestimmten Bereichs umzusetzen, und wobei das Anzeigemodul (600) konfiguriert ist, den Anzeigewert anzuzeigen, so dass ein Anwender gemäß dem Anzeigewert bestimmt, ob die erste Antenne (710) an der zweiten Antenne ausgerichtet ist,
**dadurch gekennzeichnet, dass**
das System ferner Folgendes umfasst:

ein erstes Stromversorgungsmodul (800), das konfiguriert ist, die Kommunikationsvorrichtung (700) mit Strom zu versorgen, wobei eine Versorgungsspannung des ersten Stromversorgungsmoduls niedriger ist als eine Versorgungsspannung des zweiten Stromversorgungsmoduls der Kommunikationsvorrichtung (700),

wobei die Kommunikationsvorrichtung (700) ferner Folgendes umfasst:

eine zweite Bestimmungseinheit (750), die konfiguriert ist zu bestimmen, dass das erste Stromversorgungsmodul (800) die Kommunikationsvorrichtung (700) mit Strom versorgt; und

eine Aktivierungseinheit (760), die konfiguriert ist, nur eine Empfangsfunktion aus der Empfangsfunktion und einer Sendefunktion der Kommunikationsvorrichtung (700) zu aktivieren, und

die Empfangseinheit (720) ferner konfiguriert ist, durch die Empfangsfunktion der Kommunikationsvorrichtung (700) das elektromagnetische Wellensignal, das durch die zweite Antenne gesendet wird, zu empfangen.

5. System (500) nach Anspruch 4, wobei die erste Bestimmungseinheit (730) ferner konfiguriert ist:

gemäß den folgenden Gleichungen einen Stärkewert $P_{dBm}$, der in dBm ausgedrückt ist und zu dem elektromagnetischen Wellensignal gehört, zu bestimmen:

$$P(j) = \frac{1}{M} \sum_{i=0}^{M-1} \|r(i)\|_F^2 \; ;$$

$$\tilde{P}(0) = P(0) \; ;$$

$$\tilde{P}(j) = \alpha \cdot P(j) + (1-\alpha) \cdot \tilde{P}(j-1) \; ;$$

$$P_{dBm}(j) = 10 \cdot \lg\left(\tilde{P}(j)\right) + A \; ;$$

wobei $P(j)$ ein augenblicklicher Leistungswert in einer $j$-ten Messung ist; $j$ eine nicht negative Ganzzahl ist; $M$ die Anzahl von Zeitbereichsabtastpunkten in einer Fensterlänge in einer einzelnen Messung ist; $r(i)$ das empfangene elektromagnetische Wellensignal ist; $\tilde{P}(j)$ ein Leistungswert ist, der Filterverarbeitung durchlaufen hat und in der $j$-ten Messung ist; $\alpha$ ein Filterverarbeitungskoeffizient ist; und A eine Konstante ist.

6. System (500) nach Anspruch 5, wobei die Umsetzungseinheit (740) ferner konfiguriert ist, den Stärkewert in den Anzeigewert $E$ umzusetzen, der gemäß der folgenden Gleichung bestimmt ist:

$$E = \left[ (P_{dBm} + B) \cdot \frac{10^n - 1}{Y - X} \right] \; ;$$

wobei $B$ eine Konstante ist; $n$ die Anzahl der Ziffern des Anzeigewerts ist; $X$ ein kleinster Stärkewert ist, der in dBm ausgedrückt ist und zu dem elektromagnetischen Wellensignal gehört; $Y$ ein größter Stärkewert ist, der in dBm ausgedrückt ist und zu dem elektromagnetischen Wellensignal gehört; und [] ein Operationssymbol für Rundung ist.

7. System (500) nach einem der Ansprüche 4 bis 6, wobei
das erste Stromversorgungsmodul (800) in die Kommunikationsvorrichtung (700) integriert ist; oder
das erste Stromversorgungsmodul (800) getrennt angeordnet ist und die Kommunikationsvorrichtung (700) über eine Stromquellenschnittstelle auf der Kommunikationsvorrichtung (700) mit Strom versorgt.

**8.** System (500) nach Anspruch 7, wobei
das Anzeigemodul (600) auf einer äußeren Oberfläche der Kommunikationsvorrichtung (700) angeordnet ist; oder
das Anzeigemodul (600) innerhalb eines Gehäuses des ersten Stromversorgungsmoduls (800) angeordnet ist, um
das Anzeigemodul (600) zu präsentieren, wenn das Gehäuse geöffnet ist.

**9.** System (500) nach einem der Ansprüche 4 bis 6, wobei das erste Stromversorgungsmodul (800) und das Anzeigemodul (600) eine Ausrichtungsvorrichtung unabhängig von der Kommunikationsvorrichtung (700) bilden, das erste Stromversorgungsmodul (800) die Kommunikationsvorrichtung (700) über eine Schnittstelle des universellen seriellen Busses, USB-Schnittstelle, auf der Kommunikationsvorrichtung (700) mit Strom versorgt und das Anzeigemodul (600) über die USB-Schnittstelle den Anzeigewert erhält, der durch die Kommunikationsvorrichtung (700) gesendet wird, und den Anzeigewert anzeigt.

**10.** System (500) nach Anspruch 9, wobei die Ausrichtungsvorrichtung aus einem magnetischen Material hergestellt ist; oder die Ausrichtungsvorrichtung ferner eine Anlagerungsstruktur umfasst, um auf der äußeren Oberfläche der Kommunikationsvorrichtung (700) angelagert zu sein.

**Revendications**

**1.** Procédé (100) destiné à un alignement d'antennes, comprenant :

la réception (S110) dans la direction de réception d'une première antenne, d'un signal électromagnétique transmis par une seconde antenne,
la détermination (S 120) de la valeur d'intensité du signal électromagnétique,
la conversion (S 130) de la valeur d'intensité en une valeur d'affichage dans une plage prédéterminée, et
l'affichage (S 140) de la valeur d'affichage de telle sorte que l'utilisateur détermine, en fonction de la valeur d'affichage, si la première antenne est alignée avec la seconde antenne,
**caractérisé en ce que** le procédé comprend :

lors de la détermination (S150) du fait qu'un premier module d'alimentation appartenant à un dispositif de communication, plutôt qu'un second module d'alimentation du dispositif de communication, fournit de l'énergie au dispositif de communication comprenant la première antenne, la tension d'alimentation du premier module d'alimentation étant inférieure à la tension d'alimentation du second module d'alimentation du dispositif de communication,
la validation (S 160) uniquement de la fonction de réception du dispositif de communication entre la fonction de réception et la fonction d'émission du dispositif de communication, et
la réception (S110) du signal électromagnétique transmis par la seconde antenne comprend :

la réception, grâce à la fonction de réception du dispositif de communication, du signal électromagnétique transmis par la seconde antenne.

**2.** Procédé selon la revendication 1, dans lequel la détermination (S 120) de la valeur d'intensité du signal électromagnétique comprend :

la détermination, en fonction des équations qui suivent, d'une valeur d'intensité $P_{dBm}$ qui est exprimée en dBm et qui provient du signal électromagnétique :

$$P(j) = \frac{1}{M} \sum_{i=0}^{M-1} \left\| r(i) \right\|_F^2 ;$$

$$\widetilde{P}(0) = P(0);$$

$$\widetilde{P}(j) = \alpha \cdot P(j) + (1-\alpha) \cdot \widetilde{P}(j-1);$$

$$P_{dBm}(j) = 10 \cdot \lg(\widetilde{P}(j)) + A$$

où P(j) est une valeur instantanée de puissance dans une j$^e$ mesure ; j est un nombre entier non négatif ; M est le nombre de points d'échantillonnage dans le domaine du temps dans une certaine longueur de fenêtre et dans une mesure unique ; r(i) représente le signal électromagnétique reçu ; $\widetilde{P}(j)$ est une valeur de puissance qui a subi un traitement de filtrage et qui se trouve dans la j$^e$ mesure ; $\alpha$ est un coefficient de traitement de filtrage et A est une constante.

3. Procédé (100) selon la revendication 2, dans lequel la conversion (S130) de la valeur d'intensité en valeur d'affichage dans la plage prédéterminée comprend :

la conversion de la valeur d'intensité en la valeur d'affichage E déterminée en fonction de l'équation qui suit :

$$E = \left[ (P_{dBm} + B) \cdot \frac{10^n - 1}{Y - X} \right]$$

où B est une constante ; n représente le nombre de chiffres de la valeur d'affichage ; X est la valeur minimale d'intensité qui est exprimée en dBm et qui provient du signal électromagnétique ; Y est la valeur maximale d'intensité qui est exprimée en dBm et qui provient du signal électromagnétique et [] est un symbole opératoire exprimant l'arrondi.

4. Système (500) destiné à un alignement d'antennes, comprenant un module d'affichage (600) et un dispositif de communication (700) possédant une première antenne (710), le dispositif de communication (700) comprenant en outre ;
une unité de réception (720) configurée pour recevoir, dans la direction de réception de la première antenne (710), un signal électromagnétique transmis par une seconde antenne,
une première unité de détermination (730) configurée pour déterminer une valeur d'intensité du signal électromagnétique, et
une unité de conversion (740) configurée pour convertir la valeur d'intensité en une valeur d'affichage dans une plage prédéterminée, et où
le module d'affichage (600) est configuré pour afficher la valeur d'affichage de telle sorte que l'utilisateur détermine, en fonction de la valeur d'affichage, si la première antenne (710) est alignée avec la seconde antenne,
**caractérisé en ce que** le système comprend en outre :

un premier module d'alimentation (800) configuré pour fournir de l'énergie au dispositif de communication (700), la tension d'alimentation du premier module d'alimentation étant inférieure à la tension d'alimentation d'un second module d'alimentation du dispositif de communication (700),
le dispositif de communication (700) comprend en outre :

une seconde unité de détermination (750) configurée pour déterminer que le premier module d'alimentation (800) fournit de l'énergie au dispositif de communication (700), et
une unité de validation (760) configurée pour ne valider qu'une fonction de réception parmi la fonction de réception et une fonction d'émission du dispositif de communication (700), et
l'unité de réception (720) est en outre configurée pour recevoir, grâce à la fonction de réception du dispositif de communication (700), le signal électromagnétique transmis par la seconde antenne.

5. Système (500) selon la revendication 4, dans lequel la première unité de détermination (730) est en outre configurée pour :

déterminer, en fonction des équations qui suivent, une valeur d'intensité P$_{dBm}$ qui est exprimée en dBm et qui provient du signal électromagnétique :

$$P(j) = \frac{1}{M} \sum_{i=0}^{M-1} \left\| r(i) \right\|_F^2 ;$$

$$\widetilde{P}(0) = P(0);$$

$$\widetilde{P}(j) = \alpha \cdot P(j) + (1 - \alpha) \cdot \widetilde{P}(j - 1);$$

$$P_{dBm}(j) = 10 \cdot \lg(\widetilde{P}(j)) + A$$

où $P(j)$ est une valeur instantanée de puissance dans une $j^e$ mesure ; $j$ est un nombre entier non négatif ; M est le nombre de points d'échantillonnage dans le domaine du temps dans une certaine longueur de fenêtre et dans une mesure unique ; $r(i)$ représente le signal électromagnétique reçu ; $\tilde{P}(j)$ est une valeur de puissance qui a subi un traitement de filtrage et qui se trouve dans la $j^e$ mesure ; $\alpha$ est un coefficient de traitement de filtrage et A est une constante.

6.  Système (500) selon la revendication 5, dans lequel l'unité de conversion (740) est en outre configurée pour convertir la valeur d'intensité en la valeur d'affichage E déterminée en fonction de l'équation qui suit :

$$E = \left[ (P_{dBm} + B) \cdot \frac{10^n - 1}{Y - X} \right]$$

où B est une constante ; $n$ représente le nombre de chiffres de la valeur d'affichage ; X est la valeur minimale d'intensité qui est exprimée en dBm et qui provient du signal électromagnétique ; Y est la valeur maximale d'intensité qui est exprimée en dBm et qui provient du signal électromagnétique et [] est un symbole opératoire exprimant l'arrondi.

7.  Système (500) selon l'une quelconque des revendications 4 à 6, dans lequel le premier module d'alimentation (800) est intégré dans le dispositif de communication (700), ou
    le premier module d'alimentation (800) est disposé séparément et fournit de l'énergie au dispositif de communication (700) par l'intermédiaire d'une interface de source de puissance sur le dispositif de communication (700).

8.  Système (500) selon la revendication 7, dans lequel
    le module d'affichage (600) est disposé sur la surface externe dispositif de communication (700), ou
    le module d'affichage (600) est disposé à l'intérieur du boîtier du premier module d'alimentation (800) de façon à présenter le module d'affichage (600) lorsque le boîtier est ouvert.

9.  Système (500) selon l'une quelconque des revendications 4 à 6, dans lequel le premier module d'alimentation (800) et le module d'affichage (600) forment un appareil en alignement indépendant du dispositif de communication (700), le premier module d'alimentation (800) fournit de l'énergie au dispositif de communication (700) par l'intermédiaire d'une interface de bus série universel USB sur le dispositif de communication (700) et le module d'affichage (600) récupère, par l'intermédiaire de l'interface USB, la valeur d'affichage transmise par le dispositif de communication (700), et il affiche la valeur d'affichage.

10. Système (500) selon la revendication 9, dans lequel l'appareil en alignement est constitué d'un matériau magnétique, ou encore l'appareil en alignement comprend en outre une structure d'adsorption de façon à permettre une adsorption sur la surface externe dispositif de communication (700).

<u>100</u>

```
┌─────────────────────────────────────────────────┐
│ Receive, in a receiving direction of a first     │        S110
│ antenna, an electromagnetic wave signal          │  ∿
│ transmitted by a second antenna                  │
└─────────────────────────────────────────────────┘
                        │
                        ▼
┌─────────────────────────────────────────────────┐
│ Determine a strength value of the electromagnetic │        S120
│ wave signal                                       │  ∿
└─────────────────────────────────────────────────┘
                        │
                        ▼
┌─────────────────────────────────────────────────┐
│ Convert the strength value into a display value  │        S130
│ within a predetermined range                     │  ∿
└─────────────────────────────────────────────────┘
                        │
                        ▼
┌─────────────────────────────────────────────────┐
│ Display the display value, so that a user        │        S140
│ determines, according to the display value,      │  ∿
│ whether the first antenna is aligned with the    │
│ second antenna                                    │
└─────────────────────────────────────────────────┘
```

FIG. 1

100

```
┌─────────────────────────────────────────────────┐
│   Determine that a first power supply module of the │
│      communication device supplies power to the     │
│  communication device including the first antenna, where │  ⌇S150
│  a power supply voltage of the first power supply module │
│    is lower than a power supply voltage of a second power │
│     supply module of the communication device       │
└─────────────────────────────────────────────────┘
                          │
                          ▼
┌─────────────────────────────────────────────────┐
│    Only enable a receiving function of the communication │
│  device among the receiving function and a transmitting │  ⌇S160
│        function of the communication device         │
└─────────────────────────────────────────────────┘
                          │
                          ▼
┌─────────────────────────────────────────────────┐
│       Receive, through the receiving function of the │
│  communication device, the electromagnetic wave signal │  ⌇S110
│           transmitted by the second antenna         │
└─────────────────────────────────────────────────┘
                          │
                          ▼
┌─────────────────────────────────────────────────┐
│    Determine the strength value of the electromagnetic │  ⌇S120
│                    wave signal                      │
└─────────────────────────────────────────────────┘
                          │
                          ▼
┌─────────────────────────────────────────────────┐
│  Convert the strength value into the display value within │  ⌇S130
│              the predetermined range                │
└─────────────────────────────────────────────────┘
                          │
                          ▼
┌─────────────────────────────────────────────────┐
│    Display the display value, so that the user determines, │
│  according to the display value, whether the first antenna │  ⌇S140
│           is aligned with the second antenna        │
└─────────────────────────────────────────────────┘
```

FIG. 2

System 500

Communication device 700

First antenna 710

| Receiving unit 720 | First determining unit 730 | Converting unit 740 | Displaying module 600 |

FIG. 3

System 500

Communication device 700

| First power supply module 800 | Second determining unit 750 | Enabling unit 760 | Receiving unit 720 |

FIG. 4

System 500

Communication device 700

First power supply module 800

Displaying module 600

FIG. 5A

System 500

Communication device 700

First power supply module 800

Displaying module 600

FIG. 5B

System 500

Communication device 700

First power supply module 800

Displaying module 600

FIG. 6A

System 500

Communication device 700

First power supply module 800

Displaying module 600

FIG. 6B

System 500

Communication device 700

Alignment apparatus 900

First power supply module 800

Displaying module 600

FIG. 7

**EP 2 733 870 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010008266 A1
- US 20020177405 A1